# FASCICULE DE BREVET EUROPEEN

(11) **EP 3 464 185 B1**
(45) Date de publication et mention de la délivrance du brevet: **05.01.2022**
(21) Numéro de dépôt: 17727608.6
(22) Date de dépôt: 06.06.2017
(51) Int. Cl.: C01G 49/08, C01B 3/08, C01B 3/10, C09C 1/24, H01F 1/11

(54) **PROCÉDÉ DE PRÉPARATION DE NANOMAGNÉTITE**
VERFAHREN ZUR HERSTELLUNG VON NANOMAGNETIT
METHOD FOR PRODUCING NANOMAGNETITE

(30) Priorité: 06.06.2016 FR 1655158
(43) Date de publication de la demande: 10.04.2019
(73) Titulaire: Centre National de la Recherche Scientifique, 75016 Paris (FR); Universite d'Aix-Marseille, 13007 Marseille (FR)
(72) Inventeur: BRUNET, Fabrice, 38500 COUBLEVIE (FR); CROUZET, Camille, 38610 GIERES (FR); GOFFE, Bruno, 13770 VENELLES (FR)
(74) Mandataire: Bronchart, Quentin
(86) Numéro de dépôt international: PCT/EP2017/063734
(87) Numéro de publication internationale: WO 2017/211845

(56) Documents cités:
- EP-A1- 2 749 536
- WO-A1-2014/154910
- GB-A- 191 219 002
- MALVOISIN BENJAMIN ET AL: "High-purity hydrogen gas from the reaction between BOF steel slag and water in the 473-673 K ra", INTERNATIONAL JOURNAL OF HYDROGEN ENERGY, ELSEVIER SCIENCE PUBLISHERS B.V., BARKING, GB, vol. 38, no. 18, 3 mai 2013 (2013-05-03), pages 7382-7393, XP028562599, ISSN: 0360-3199, DOI: 10.1016/J.IJHYDENE.2013.03.163

## Description

La présente invention concerne un procédé de préparation de magnétite sous forme de particules de taille nanométrique.

La magnétite de formule Fe₃O₄, est un minéral très riche en fer, dense (densité de 5,1 g/cm³), magnétique, de grande dureté (5,5 à 6 sur l'échelle de Mohs) et de forte conductivité thermique (5 W/m.K). Il s'agit un minéral inerte, très stable dans l'environnement et sans risque pour la santé. Toutes ces propriétés en font un minéral recherché, tout d'abord comme source de fer, car il s'agit du minerai à base de fer le plus riche en fer. 750 millions de tonnes sont extraites annuellement pour satisfaire un tiers des besoins mondiaux en acier (1,5 milliard de tonnes). La magnétite est également utilisée pour beaucoup d'autres applications industrielles comme les ballasts, les bétons denses, les matériaux de protection contre les radiations ou le traitement des boues. Pour certaines applications comme les pigments de peinture, les toners, le traitement de l'eau ou pour réaliser des ferrofluides, elle est utilisée sous forme micrométrique ou nanométrique.

La magnétite de taille nanométrique est particulièrement recherchée. Elle combine en effet les propriétés uniques de superparamagnétisme et de réactivité de surface caractéristiques des nanoparticules et n'étant pas obtenues pour d'autres tailles de particules.

Le broyage de minerai de Fe₃O₄ permet au mieux de préparer des particules de taille de quelques microns, voire de l'ordre de 500 nm, mais ne permet pas d'atteindre les tailles nanométriques.

De nombreux procédés de préparation de magnétite sont connus, certains à partir de wüstite, mais ces procédés conduisent généralement à l'obtention de magnétite sous forme de particules de taille micrométriques ou submicrométriques.

La demande WO 2014/154910 décrit un procédé de préparation d'hydrogène par réaction de laitiers d'aciérie avec de l'eau. Un solide contenant de la magnétite est un coproduit de l'hydrogène obtenu lors de cette réaction. Elle sert pour le suivi de l'avancement de la réaction de production d'hydrogène par méthode magnétique. Toutefois, la magnétite n'a ni été séparée du reste du solide obtenu, ni caractérisée, car l'objectif du procédé décrit dans cette demande est de préparer de l'hydrogène, et non de la magnétite, qui est un seulement un sous-produit de la réaction.

La demande EP 2 749 536 A1 divulgue un procédé de production de magnétite par oxydation de wüstite pulvérisée par de l'eau, à une température comprise entre 200 °C et 800 °C.

La méthode usuelle pour préparer des particules nanométriques de magnétite est la synthèse par voie chimique à partir de fer soluble (par exemple FeCl₂) [1,2], lui-même obtenu à partir du traitement de déchets sidérurgiques avec de l'acide chlorhydrique.

Un des objectifs de l'invention est de fournir un procédé de préparation de magnétite sous forme nanométrique alternatif à la synthèse à partir de fer soluble décrite ci-dessus.

A cet effet, l'invention concerne un procédé de préparation de magnétite comprenant les étapes de :
a) réaction à une température de 100 à 500°C d'un matériau contenant de la wüstite avec de l'eau, l'eau étant l'eau d'une solution aqueuse dont le pH de la solution aqueuse est de 2 à 5 lorsque ladite solution aqueuse est à 25°C et à 1 bar, pour obtenir un solide comprenant de la magnétite, puis
b) récupération de la magnétite sous forme de particules dont plus de 25% en poids sont de taille nanométrique.

Généralement, le procédé selon l'invention permet de préparer de la magnétite sous forme de particules de tailles micrométrique et nanométrique. Plus de 25% en poids de ces particules sont de taille nanométrique.

Au sens de la présente demande, les tailles de particules correspondent à leurs diamètres déterminés par imagerie électronique (Microscopie électronique à balayage (MEB), par exemple avec un appareil ZEISS ULTRA55, ou microscopie électronique à transmission (MET), par exemple avec un appareil JEOL-FEG 2100F). Par « nanométrique », on entend inférieur à 500 nm, de préférence inférieur à 250 nm. Par « micrométrique », on entend de 500 nm à 500 µm, de préférence de 1 à 200 µm.

Le procédé comprend une étape a) de réaction à une température de 100 à 500°C d'un matériau contenant de la wüstite avec de l'eau, l'eau étant l'eau d'une solution aqueuse dont le pH est de 2 a 5 lorsque ladite solution aqueuse est a 25°C et a 1 bar, pour obtenir un solide comprenant de la magnétite.

Le matériau contenant de la wüstite est typiquement sous forme de grains de taille de 10 nm à 10 cm, typiquement 25 nm à 1 cm, par exemple de 50 nm à 50 µm. Le procédé peut comprendre, préalablement à l'étape a), une étape de broyage du matériau contenant de la wüstite, ou en être exempt (le matériau étant alors utilisé dans sa forme initiale).

La réaction de l'étape a) est généralement mise en œuvre dans un réacteur. La mise en contact du matériau contenant de la wüstite et de la solution aqueuse peut être réalisée dans le réacteur, par exemple en introduisant le matériau contenant de la wüstite avant la solution aqueuse dans le réacteur, ou, de préférence, avant le réacteur. Typiquement, une suspension du matériau contenant de la wüstite dans la solution aqueuse est introduite dans le réacteur, par exemple par un lit fluidisé.

Le matériau contenant de la wüstite comprend généralement au moins 5% en poids, typiquement au moins 10% en poids de wüstite (FeO).

Dans un mode de réalisation, le matériau contenant de la wüstite est un laitier d'aciérie, typiquement un laitier d'aciérie de conversion (LAC) (« basic-oxygen-furnace (BOF) slag » en anglais) ou un laitier d'aciérie à four électrique (LAFE) (« electric-arc-furnace EAF) slag » en anglais). De tels laitiers d'aciérie contiennent généralement de 5 à 40% en poids, typiquement de 10 à 20% en poids de wüstite.

La production mondiale de laitier LAC et LAFE est d'environ 150 - 200 millions de tonnes par an. La fabrication d'acier produit lors de la dernière étape de transformation de la fonte dans les convertisseurs à oxygène autour de 100 - 150 kg de laitier d'aciérie par tonne d'acier. Ces laitiers d'aciérie sont principalement valorisés pour des applications à faible valeur ajoutée (remblais ou granulats), une partie restant stockée comme déchets sous la forme de terrils sur les sites sidérurgiques. Par exemple, depuis 40 ans, l'usine de FOS sur Mer a stocké 12 millions de tonnes de laitier d'aciérie. Il existe donc un besoin de développer des filières de valorisation de ces laitiers d'aciérie.

Dans ce mode de réalisation, le procédé selon l'invention permet avantageusement la préparation de nanomagnétite à forte valeur ajoutée à partir d'un matériau abondant, produit en masse par la sidérurgie et actuellement essentiellement considéré comme un déchet. Avantageusement, les températures requises pour mettre en œuvre la réaction de l'étape a) peuvent être atteintes en utilisant les chaleurs résiduelles de l'usine sidérurgique.

Lorsque le matériau contenant de la wüstite est un laitier d'aciérie, le procédé peut comprendre, avant l'étape a), une étape de broyage du laitier d'aciérie, typiquement à une taille de grains de 10 nm à 100 µm, par exemple de 50 nm à 50 µm. La taille des grains de laitiers d'aciérie obtenus après broyage semble avoir peu, voire pas d'influence sur la cinétique de la réaction de l'étape a). Le procédé peut donc également être exempt d'étape préalable de broyage du laitier d'aciérie.

Le laitier d'aciérie mis en œuvre dans le procédé peut être un laitier frais partiellement refroidi, ayant typiquement une température inférieure à 500°C, ou un laitier à température ambiante (autour de 25°C), comme dans le cas d'un laitier ayant été préalablement stocké. Utiliser un laitier frais partiellement refroidi permet avantageusement de ne pas avoir à réchauffer le laitier à la température de la réaction de l'étape a). Même si l'utilisation d'un laitier à température ambiante requiert de chauffer pour atteindre les températures requise à l'étape a), le procédé reste avantageux en ce qu'il permet de valoriser les stocks de laitiers d'aciérie.

Le laitier d'aciérie peut être vieilli ou non, ce vieillissement pouvant être naturel ou artificiel.

Le vieillissement naturel des laitiers consiste à les exposer aux intempéries. Le laitier d'aciérie contient du CaO (environ 40% en poids). L'action conjuguée de l'humidité et du gaz carbonique présents dans l'atmosphère va peu à peu transformer la chaux libre en composés plus stables suivant les réactions :
Réaction d'hydratation : CaO + H₂O → Ca(OH)₂
Réaction de carbonatation : Ca(OH)₂ + CO₂ → CaCO₃ + H₂O

Le laitier d'aciérie utilisé dans le procédé peut être vieilli artificiellement. Par exemple, le procédé peut comprendre, avant l'étape a), une étape de traitement du laitier d'aciérie par du dioxyde de carbone (CO₂) (carbonatation), par exemple selon la méthode décrite dans [3].

En alternative, cette carbonatation peut être mise en œuvre en même temps que l'étape a). Ainsi, dans un mode de réalisation, l'étape a) est mise en œuvre en maintenant une pression partielle de CO₂. Ce mode de réalisation permet une séquestration du CO₂ plus importante du laitier tout en maintenant la production de nanomagnétite. La dissolution d'acide carbonique au cours de l'étape a) permet d'abaisser le pH à des valeurs inférieures à 6 (situées entre 5 et 6).

Il a été observé que la carbonatation (avant ou pendant l'étape a) a peu d'influence sur le rendement en magnétite obtenue à la fin du procédé. Même si la carbonatation du laitier d'aciérie permet de diminuer la quantité de CaO, qui défavorise la réaction en ce qu'il augmente le pH de la solution aqueuse, des mesures de diffraction aux rayons X ont montré qu'une partie du fer est piégée dans les carbonates de fer et n'est donc plus disponible pour former de la magnétite.

La réaction de l'étape a) du procédé est mise en œuvre en présence d'eau, notamment en présence d'une solution aqueuse. Comme détaillé ci-après, le pH de la solution aqueuse de pH est compris entre 2 et 5. Or, les composés CaO, Ca(OH)₂ et CaCO₃ du laitier d'aciérie sont basiques, ce qui implique qu'il est nécessaire d'utiliser des quantités importantes d'acide pour que la solution aqueuse ait un pH inférieur à 7. Afin d'éviter d'avoir à utiliser de grandes quantités d'acide, le laitier d'aciérie utilisé dans l'étape a) peut être décalcifié (totalement ou partiellement). Afin de décalcifier le laitier d'aciérie, le procédé peut comprendre, avant l'étape a), une étape de mise en contact du laitier d'aciérie avec une solution aqueuse de décalcification de pH de 1 à 6, généralement de 2 à 5, typiquement une solution d'acide acétique à une concentration par exemple comprise entre 0,5 et 10 mol/L, ce par quoi un mélange du laitier d'aciérie et de la solution aqueuse de décalcification est obtenu. D'autres types d'acide pourraient bien sûr être utilisés. La mise en contact est généralement mise en œuvre à une température de 0 à 50°C, typiquement à température ambiante (de l'ordre de 25°C) et de préférence à pression atmosphérique (de l'ordre de 1 bar). Cette étape préalable de décalcification est simple et rapide et permet de décalcifier le laitier d'aciérie de façon efficace, en ce qu'elle permet de minimiser les quantités d'acide à utiliser lors de l'étape a), pour que la solution aqueuse ait un pH inférieur à 7. A ce sujet, au niveau industriel, il est plus aisé, plus économique et plus sécurisant pour les opérateurs d'ajouter une étape de prétraitement avec une solution aqueuse acide à température ambiante et pression atmosphérique plutôt que de mettre en œuvre la réaction de l'étape a), généralement réalisée à hautes températures et pression, avec des quantités importantes d'acide.

Typiquement, le procédé comprend alors, après l'étape de mise en contact du laitier d'aciérie avec une solution aqueuse de décalcification de pH de 1 à 6 et avant l'étape a), une étape de séparation de la solution aqueuse de décalcification et du laitier d'aciérie (typiquement par filtration ou centrifugation). En effet, généralement, la solution de décalcification n'est pas utilisée pour mettre en œuvre l'étape a), car elle comprend de nombreuses espèces dissoutes, en particulier du calcium.

Le procédé peut comprendre, après l'étape de mise en contact du laitier d'aciérie avec une solution aqueuse de pH de 1 à 6 et avant l'étape a), une étape d'ajout de CO₂ au mélange du laitier d'aciérie et de la solution aqueuse de décalcification, puis une étape de séparation de la solution aqueuse de décalcification et du laitier d'aciérie. La solution aqueuse de décalcification est riche en calcium dissous, l'ajout de CO₂ permet la précipitation de carbonate de calcium et la régénération de l'acide initial, et donc de la solution aqueuse de décalcification, qui peut être alors être réutilisée pour mettre en œuvre une décalcification [4].

Dans un autre mode de réalisation, le matériau contenant de la wüstite est de la wüstite (FeO).

Ce mode de réalisation est celui qui permet d'obtenir les meilleures cinétiques pour la réaction a). Cela étant, ce n'est pas le mode de réalisation le plus économique, dans la mesure où le FeO utilisé comme produit de départ est bien plus onéreux qu'un laitier d'aciérie. De plus, les rendements en magnétite (par rapport au fer contenu dans le matériau contenant de la wüstite utilisé) sont similaires en à ceux obtenus en utilisant un laitier d'aciérie comme produit de départ.

De préférence, la surface spécifique de la wüstite, telle que mesurée par volumétrie de gaz (méthode N₂ BET) est supérieure à 0,3 m²/g.

Dans un autre mode de réalisation, le matériau contenant de la wüstite est un résidu sidérurgique sous forme de particules de tailles mesurées par microscopie électronique à balayage à effet de champ de 1 µm à 400 µm, généralement avec une taille moyenne comprise entre 15 et 75 µm. Ces particules comprennent généralement de 30 à 70% en poids, notamment de 40% à 60% en poids, de wüstite. Typiquement, ce résidu est sous forme :
- de poussières issues de la production de la grenaille d'acier. Ces poussières sont produites lors d'un procédé de trempe à l'air des grenailles nouvellement produites. La composition minéralogique de ces poussières est typiquement de 35% à 55% en poids de wüstite, de 18 à 38% en poids de fayalite magnésienne (Fe,Mn)₂SiO₄, de 12 à 32% en poids de magnétite (Fe₃O₄) et de 0 à 15% en poids d'hématite (Fe₂O₃). La taille moyenne des particules de ces poussières mesurée par microscopie électronique à balayage à effet de champ de cette boue est généralement de 15 à 35 µm, ou
- de boue de décantation issue de la production de la grenaille d'acier. Ces boues sont produites lors de la trempe de l'acier liquide entrainant la formation de grenailles. Les boues de décantation regroupent les particules trop fines et une partie des impuretés présentes dans l'acier fondu. La composition minéralogique de cette boue est typiquement de 45% à 65% en poids de wüstite, de 35 à 55% en poids de fayalite magnésienne (Fe,Mn)₂SiO₄, et de 0 à 20% en poids de magnétite (Fe₃O₄). La taille moyenne des particules de cette boue mesurée par microscopie électronique à balayage à effet de champ de cette boue est généralement de 40 à 60 µm.

Les trois modes de réalisation décrits ci-dessus ne sont pas limitatifs. Il est possible d'utiliser d'autres matériaux contenant du FeO.

La température lors de la réaction de l'étape a) est de 100 à 500°C, notamment de 150 à 350°C, par exemple de 150 à 250°C. Sans vouloir être lié à une théorie particulière, l'augmentation de la température favoriserait à la fois la cinétique de dissolution de FeO et la cinétique de l'oxydation de FeO, ce qui permettrait d'accélérer la conversion de la réaction.

Généralement, la pression lors de la réaction de l'étape a) est de 5 à 700 bars, notamment de 10 à 400 bars, de préférence de 40 à 200 bars.

Ces températures et pressions sont en effet particulièrement adaptées pour que le rendement de la réaction soit bon. En pratique, la pression et la température sont de préférence telles que l'eau n'est pas en condition supercritique. En effet, un procédé utilisant de l'eau supercritique est généralement plus difficile à mettre en œuvre industriellement.

La réaction a) met en œuvre de l'eau d'une solution aqueuse dont le pH est de 2 à 5, lorsqu'elle est à 25°C et à 1 bar.

Lors de la réaction, l'eau de la solution aqueuse est sous forme gazeuse et/ou liquide. Généralement, au moins une partie de la solution aqueuse est sous forme liquide.

Au sens de la demande, le pH de la solution aqueuse est le pH mesuré lorsque la solution aqueuse est à 25°C et à 1 bar (température ambiante et pression atmosphérique), typiquement au début de la réaction (t = 0), c'est-à-dire lorsque le matériau contenant de la wüstite et la solution aqueuse sont portés à la température de réaction, comprise de 100 à 500°C. La solution aqueuse peut être partiellement gazeuse dans les conditions de températures et de pression de la réaction, mais lorsqu'elle est condensée à 25°C et à 1 bar, son pH est de 2 à 5.

Le pH joue un rôle important dans la cinétique de la réaction de l'étape a). Sans vouloir être lié à une théorie particulière, l'acidité favoriserait la cinétique de dissolution de FeO et permettrait d'accélérer la conversion de la réaction. Le pH de la solution est supérieur à 2. En effet, la plupart des réacteurs ne résistent pas à des solutions aqueuses ayant un pH inférieur et les réacteurs susceptibles d'y résister sont chers. Le pH de la solution aqueuse est de de 2 à 5, de préférence typiquement de 2 à 4, par exemple de 2,5 à 3.

La solution aqueuse est typiquement d'une solution aqueuse d'un ou plusieurs acides. L'homme du métier est à même d'ajuster le pH, notamment par ajout d'un ou plusieurs acides. Divers acides, organiques, inorganiques ou mélanges d'acides, peuvent être utilisés. On peut citer l'acide chlorhydrique comme acide inorganique utilisable. Les acides organiques comprenant un groupe susceptible de se complexer avec les ions fer, comme le groupe -COOH, sont préférés. Typiquement, l'acide oxalique, l'acide acétique ou un mélange de ceux-ci sont utilisés. L'acide acétique est particulièrement préféré car il supporte des températures élevées sans se dégrader et qu'il favorise la dissolution du fer et donc la réaction de production de magnétite.

La quantité d'acide à introduire pour que la solution aqueuse ait le pH désiré dépend de la nature du matériau comprenant de la wüstite. Par exemple, lorsque ce matériau est un laitier d'aciérie qui contient du CaO, du Ca(OH)₂ et/ou du CaCO₃, des quantités plus importantes d'acide sont nécessaires pour que le pH de la solution aqueuse soit de 2 à 5, car ces composés neutralisent l'acide. Lorsque le matériau comprenant de la wüstite comprend peu, ou est exempt de, composés acides et/ou basiques (notamment de la wüstite ou un laitier d'aciérie décalcifié), une solution aqueuse d'acide acétique à une concentration de 0,01 à 10 mol/L, par exemple de 0,01 à 2 mol/L est typiquement utilisée.

Typiquement, lors de l'étape a), le rapport massique de la wüstite contenue dans le matériau contenant de la wüstite par rapport à l'eau est de 1/0,1 à 1/1000, par exemple de 1/1 à 1/100.

De préférence, le milieu réactionnel est agité lors de la réaction, par exemple à une vitesse de 50 à 1000 tours par minute, ce qui permet d'augmenter la cinétique de la réaction de l'étape a). Sans vouloir être lié à une théorie particulière, l'agitation favoriserait l'homogénéisation du milieu réactionnel et donc la cinétique de dissolution de FeO, ce qui permettrait d'accélérer la conversion de la réaction de l'étape a).

La durée de la réaction de l'étape a) est généralement inférieure à 70 heures, de préférence inférieure à 48 heures, par exemple inférieure à 15 heures lorsqu'elle est mise en œuvre à une température de l'ordre de 150°C à une pression entre 150 et 200 bars et avec une solution aqueuse de pH de 2 à 3. Comme expliqué ci-dessus, la durée de la réaction est d'autant plus courte que la température est élevée et que la solution aqueuse s'approche de la gamme optimale de pH (2,5 à 3).

Dans un mode de réalisation, le matériau contenant de la wüstite est de la wüstite, le pH (tel que défini ci-dessus) de la solution aqueuse est de 2 à 3, la pression est de 100 à 200 bars et la température est de 150 à 250°C.

Dans un autre mode de réalisation, le matériau contenant de la wüstite est un laitier d'aciérie ayant été préalablement décalcifié (de préférence par mise en contact du laitier d'aciérie avec une solution aqueuse de pH de 2 à 6), le pH (tel que défini ci-dessus) de la solution aqueuse est de 3 à 4, la pression est de 100 à 200 bars et la température est de 150 à 350°C, notamment de 200 à 300°C.

L'étape a) est simple et économique, en ce qu'elle consiste en un traitement hydrothermal, qui n'utilise qu'une solution aqueuse, typiquement de l'eau et un ou plusieurs acides. Généralement, aucun métal supplémentaire à ceux contenus initialement dans le matériau contenant de la wüstite n'est ajouté lors de la réaction a). Typiquement, aucun matériau et/ou composé autre que le matériau contenant de la wüstite et la solution aqueuse (qui consiste généralement en une solution aqueuse d'un ou plusieurs acides) n'est ajouté pour mettre en œuvre la réaction de l'étape a).

La réaction de l'étape a) est une oxydation de la wüstite avec de l'eau sous température selon le schéma réactionnel suivant :

3 FeO (wüstite) + H₂O → Fe₃O₄ (magnétite) + H₂

La conversion de la réaction peut être suivie par analyse de la production d'hydrogène dans la phase gazeuse, par exemple par chromatographie en phase gazeuse. L'extraction d'un échantillon de phase gazeuse peut être mise en œuvre en utilisant un réacteur équipé d'un système de prélèvement de gaz. La conversion de la réaction peut également être suivie par mesure magnétique.

Lors de la réaction sont produits un solide comprenant de la magnétite et une phase gazeuse qui comprend de l'hydrogène.

Le procédé peut comprendre, entre les étapes a) et b), une étape de séchage du solide comprenant de la magnétite obtenu lors de l'étape a), par exemple en le plaçant sous air chaud.

Le procédé comprend une étape b) de récupération de la magnétite sous forme de particules dont plus de 25% en poids sont de taille nanométrique, à partir du solide obtenu à l'étape a).

Lorsque le matériau contenant de la wüstite utilisé comme produit de départ est de la wüstite, le solide obtenu à la fin de l'étape a) comprend majoritairement de la magnétite, éventuellement de la wüstite résiduelle, et, éventuellement d'autres oxydes métalliques minoritaires, comme de la lépidocrite et/ou de la goethite.

Lorsque le matériau contenant de la wüstite utilisé comme produit de départ comprend d'autres composés en plus de la wüstite (typiquement pour un laitier d'aciérie), la récupération de l'étape b) est généralement effectuée par séparation magnétique. La séparation magnétique est effectuée en appliquant un champ magnétique, ce qui permet d'éliminer la majorité des phases contenant du calcium : calcite, portlandite, larnite et de ne conserver que les phases contenant du fer, intimement associées à la magnétite : Fe₃O₄, FeO, (Fe,Mg)O et Ca₂(Fe,Al)₂O₅. Ainsi, la séparation magnétique permet de récupérer une fraction riche en magnétite qui contient minoritairement de la wüstite (avec une proportion massique de magnétite généralement supérieure à 80% de cette fraction riche en magnétite).

La séparation magnétique est typiquement réalisée sur une suspension du solide obtenu à la fin de l'étape a) dans une solution aqueuse, comme de l'eau et/ou une solution acide, typiquement une solution aqueuse de pH inférieur à 6, par exemple une solution aqueuse d'acide chlorhydrique ou d'acide acétique. Des ultrasons peuvent être appliqués à la suspension afin de faciliter la désagrégation des agrégats de solide. L'étape b) peut donc comprendre le broyage du solide comprenant de la magnétite obtenu à l'étape a), puis la préparation d'une suspension du solide broyé dans une solution aqueuse, puis l'application d'ultrasons à cette suspension puis la séparation magnétique.

L'étape b) peut comprendre plusieurs étapes successives de séparation magnétique, lors desquelles le solide est suspendu dans des solutions aqueuses identiques ou différentes. Généralement, l'étape b) comprend alors les sous-étapes de :
b1) éventuellement broyage du solide comprenant de la magnétite obtenu à l'étape a), puis
b2) ajout d'eau ou d'une solution acide au solide comprenant de la magnétite pour obtenir un mélange,
b3) séparation magnétique du mélange de l'étape b2) pour obtenir un solide,
b4) ajout d'eau ou d'une solution acide au solide obtenu à l'étape b3) pour obtenir un mélange,
b5) séparation magnétique du mélange de l'étape b4) pour obtenir la magnétite sous forme de particules dont plus de 25% en poids sont de taille nanométrique.

Typiquement, l'étape b1) de broyage est mise en œuvre lorsque le matériau contenant de la wüstite utilisé comme produit de départ dans le procédé n'a pas été broyé et a été utilisé dans sa forme initiale. Lorsqu'au contraire, le matériau contenant de la wüstite utilisé comme produit de départ dans le procédé a été broyé avant de mettre en œuvre l'étape a), l'étape b1) n'est généralement pas mise en œuvre.

Dans les étapes b2) et/ou b4), une solution acide est de préférence utilisée, car les éventuels carbonates de calcium résiduels se dissolvent alors dans la solution acide et sont donc éliminés du solide.

Lorsqu'un laitier d'aciérie est utilisé comme matériau contenant de la wüstite, la concentration d'oxyde de fer du solide obtenu à la fin de l'étape b5) est généralement supérieur à 90%, alors qu'il était de 20% dans le laitier initialement. La proportion de magnétite dans le solide obtenu à la fin de l'étape b5) est de 80% au moins.

L'invention repose sur la découverte inattendue que le solide obtenu à la fin de l'étape b) comprend des particules de magnétite de taille nanométrique. En effet, les procédé hydrothermaux à des températures de l'ordre de 200-300°C favorisent souvent la croissance cristalline et donc les particules de tailles plurimicrométriques.

Le solide obtenu à la fin de l'étape b) contient généralement de la magnétite sous formes de particules avec trois populations de taille :
- de 10 à 20 nm,
- de 100 à 200 nm,
- de taille micrométrique, typiquement de 1 à 200 µm.

De telles populations sont généralement obtenues quel que soit le matériau contenant de la wüstite utilisé comme produit de départ (wüstite ou laitier d'aciérie). La proportion de chaque population peut être déterminée par exemple par microscopie électronique à transmission et/ou par analyse granulométrique laser. Les proportions massiques en nanomagnétite (c'est-à-dire les deux premières populations ci-dessus) sont supérieures à 25% par rapport à la magnétite totale (c'est-à-dire l'ensemble des trois populations ci-dessus). La magnétite obtenue à la fin de l'étape b) a donc des propriétés de superparamagnétisme.

Cette magnétite peut être utilisée telle quelle dans de nombreuses applications, par exemple comme pigment (l'avantage de la magnétite est sa résistance à l'altération météorique qui fait que le pigment peut être utilisé à l'extérieur dans les peintures, la coloration du béton, des revêtements de sols, de route, les tuiles, le verre), pour le stockage de la chaleur grâce à ses propriétés physiques exceptionnelles (chaleur spécifique, conductivité thermique et densité), comme agent de densification des matériaux (par exemple pour la préparation de bétons denses pour la protection contre les rayonnements ou pour la densification des plastique et caoutchoucs), pour le traitement de l'eau (la magnétite a l'avantage de sa densité et de sa capacité à être sensible au champ magnétique et pouvoir être récupérée entrainant avec elle la matière: filtrage, nettoyage des boues, décontamination de l'eau), comme source de fer dans la chimie (chlorures, sulfates) pour le traitement de l'eau dans les stations d'épuration, comme abrasif (peu toxique et efficace) lorsqu'elle est utilisée en poudre, dans des jets d'eau sous pression pour découpe, pour la catalyse dans l'industrie de l'ammoniac et des hydrocarbures, comme minerai de fer pour la sidérurgie ou encore comme additif fertilisant.

Certaines applications nécessitent d'utiliser de la magnétite sous forme majoritairement nanométrique, par exemple l'utilisation de la magnétite dans les toners pour imprimante et photocopieurs, ou comme ferrofluide pour des applications de haute technologie : (médecine, joints de disque dur, amortisseurs innovants pour voiture, transfert de la chaleur...).

Ainsi, le procédé peut comprendre, après l'étape b), une étape c) de séparation des particules nanométriques de la magnétite obtenue à l'étape b). Cette séparation peut par exemple être effectuée par un séparateur magnétique à haut gradient (HGMS). Un tel séparateur utilise généralement une matrice de type laine de fer ou plaque de métal expansé introduite à l'intérieur d'un champ magnétique. La séparation s'effectue par le passage de la suspension à séparer au travers de cette matrice métallique. Typiquement, cette étape permet de séparer les particules de nanomagnétite de taille de 10 à 20 nm du reste de la magnétite [5]. La taille critique de séparation dépend notamment des dimensions de la laine de fer utilisée : les particules les plus petites sont récupérées par les laines de fer les plus petites. La séparation des particules en différentes classes granulométriques est alors réalisée par passages successifs de la suspension au travers de matrices de plus en plus fines. Les nanomagnétites séparées sont extraites par nettoyage de ces matrices.

L'étape c) de séparation des particules nanométriques de la magnétite obtenue à l'étape b).peut comprendre, avant la séparation par un séparateur magnétique à haut gradient, la séparation des particules de magnétite obtenue à l'étape b) en deux groupes de population de tailles différentes, cette séparation comprenant les sous-étapes suivantes :
- a) ajout d'eau ou d'une solution acide à la magnétite sous forme de particules dont plus de 25% en poids sont de taille nanométrique obtenue à l'étape b) pour obtenir une suspension,
- β) faire s'écouler la suspension dans un récipient et appliquer une force magnétique sur les parois du récipient, ce par quoi les particules de tailles plus élevées se collent aux parois alors que les particules de tailles plus faibles restent dans la suspension en écoulement,
- γ) récupérer les particules de tailles plus faibles.

Ainsi, les particules sont séparées en deux groupes de particules de tailles différentes par mise en concurrence de la force d'attraction magnétique avec une force d'écoulement. Les particules les plus grandes sont plus sensibles au champ magnétique et vont être attirés par le champ magnétique tandis que les plus fines sont maintenues dans la suspension.

Par exemple, l'écoulement est créé par une agitation de la suspension dans le récipient. La force magnétique peut être initiée par un aimant permanent ou un électroaimant dont l'intensité varie avec l'aimant utilisé.

La séparation des particules de magnétite obtenue à l'étape b) en deux groupes de population de tailles différentes peut être améliorée par l'utilisation d'ultrasons pour faciliter la désagrégation des agrégats de particules.

Le séparateur magnétique à haut gradient (HGMS) permet alors de récupérer les particules de nanomagnétite à partir des particules de tailles plus faibles obtenues à l'étape γ).

Cette étape de séparation des particules de magnétite obtenue à l'étape b) en deux groupes de population de tailles différentes est facultative selon l'efficacité la séparation avec le séparateur magnétique à haut gradient (HGMS) et selon la distribution des particules de magnétite. Aussi, en alternative, la séparation avec le séparateur magnétique à haut gradient (HGMS) est réalisée directement sur les particules de magnétite obtenue à l'étape b).

Les particules de taille nanométrique obtenues à l'étape c) ont généralement une surface spécifique mesurée par N²-BET de 5 à 200 m²/g.

De préférence, l'étape c) de séparation permet de séparer chacune des trois populations de particules de magnétite.

Les sous-produits du procédé sont l'hydrogène et, lorsqu'un laitier d'aciérie a été utilisé comme matériau contenant de la wüstite, un résidu solide à base de silicate stabilisé, qui peut par exemple être utilisé comme granulats.

L'hydrogène produit peut également être valorisé. Le procédé peut comprendre, après l'étape a), une étape de refroidissement de la phase gazeuse, typiquement jusque température ambiante (25°C), pour permettre la séparation de l'hydrogène et de la vapeur d'eau qui se condense. Cette étape permet de récupérer l'hydrogène. La chaleur de la phase gazeuse peut éventuellement être récupérée grâce à un échangeur de chaleur et réutilisée, typiquement pour l'étape a).

Le procédé peut être mise en œuvre par lot (« batch » en anglais) ou de façon continue.

Les exemples et figures ci-après illustrent l'invention.
La figure 1 est une image obtenue par FE-SEM (appareil ZEISS Ultra 55 en utilisant une détection d'électrons secondaires) du solide obtenu à la fin de l'expérience n°20 de l'exemple 1 avec un grossissement de 20000 (référence de type Polaroïd).
La figure 2 est une image obtenue par FE-SEM (appareil ZEISS Ultra 55 en utilisant une détection d'électrons secondaires) du solide obtenu à la fin de l'expérience n°31 de l'exemple 3 avec un grossissement de 50000
La figure 3 est une image obtenue par (MET) (« Transmission Electronic Microscopy » (TEM)) (appareil Jeol FEG 2100F utilisé à 200 kV) du solide obtenu à la fin de l'expérience n°20 de l'exemple 1.

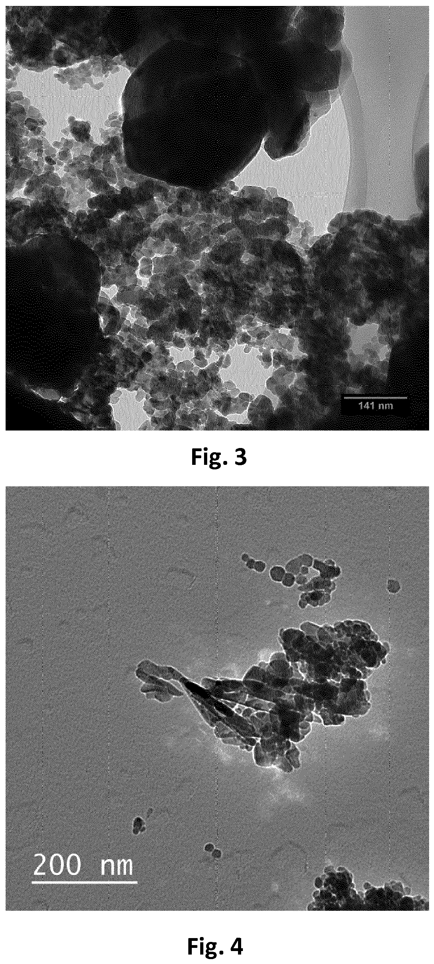

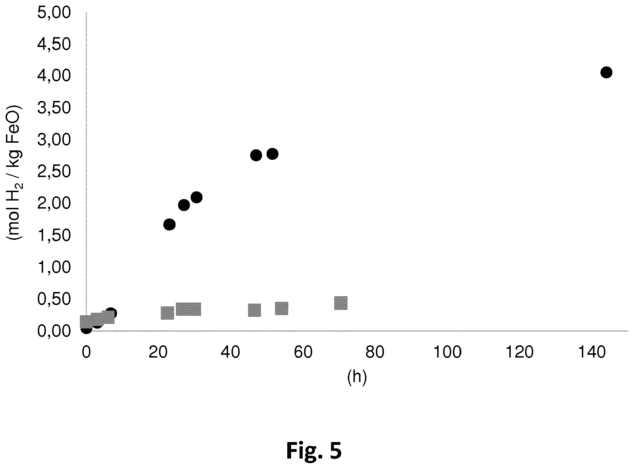

La figure 4 est une image obtenue par (MET) (« Transmission Electronic Microscopy » (TEM)) (appareil Jeol FEG 2100F utilisé à 200 kV) du solide obtenu à la fin de l'expérience n°31 de l'exemple 3. La figure 5 représente la quantité d'hydrogène produit normalisé par la concentration théorique en oxyde ferreux (FeO) des échantillons (mol H₂ / kg FeO) en fonction du temps en heure (h) pour le laitier d'aciérie utilisé sans traitement préalable (carrés) dans l'eau (expérience 33) ou le laitier d'aciérie préalablement décalcifié par prétraitement avec une solution d'acide acétique et réagi dans une solution d'acide acétique à 1 mol/L (ronds) (expérience 34) (exemple 4).

### Exemple 1 : Préparation de magnétite à partir de wüstite

Les expériences 21 et 22 ne sont pas couvertes par les revendications.

De la wüstite (FeO 99,9%, Aldrich) a été broyée et tamisée jusqu'à une taille de particules de 50 à 100 µm et une surface spécifique mesurée par N₂-BET(Belsorp-Max fourni par BEL JAPAN Inc.III) de 0,70 m²/g. L'état d'oxydation du fer dans le matériau de départ, quantifié par spectroscopie Mössbauer (de marque Ortec)( était de 91,6% Fe²⁺, 5,6% Fe³⁺ et 2,8% FeO. L'état d'oxydation moyen du fer correspond à du Fe(II) pur, en accord avec le grade de FeO utilisé.

Pour les expériences 1 à 3, la wüstite a été utilisée sans broyage préalable. Pour les autres expériences, elle a été broyée (50 - 100 µm)

Les solutions aqueuses étaient des solutions aqueuses d'acide acétique, oxalique ou chlorhydrique dans les concentrations et aux pH indiqués dans le tableau 1, ou bien de l'eau.

Les expériences 1 à 19 ont été réalisées dans des capsules en or de 2 cm de long, 4,0 mm de diamètre extérieur et 3,6 mm de diamètre intérieur. 80 mg de wüstite de et la solution aqueuse y ont été introduits avec un rapport massique 1/1. La capsule fermée a été introduite dans un réacteur sous pression lui-même introduit dans un four. Des températures de 100 à 200°C à une pression d'argon de 300 bars ont été utilisées. A la fin de l'expérience, un flux d'air comprimé a été utilisé pour diminuer la pression. La phase gazeuse produite par l'échantillon a été récupérée pour analyse.

Les expériences 20 à 22 ont été réalisées dans un autoclave de 500 mL en hastelloy^{™} munie de deux colliers chauffants externes en céramique pour le chauffage. Le milieu réactionnel était agité à 800 tours par minute. Cette autoclave permet le suivi en temps réel de la production d'hydrogène, et donc de la conversion de la réaction. L'échantillon de phase gazeuse sous hautes pression et température prélevé était condensé dans un condenseur à l'eau froide puis analysé par chromatographie en phase gazeuse. Des échantillons de solution étaient également prélevés grâce à un capillaire et filtrés sur un filtre en titane de pore de 0,2 µm pour analyse ultérieure par spectrométrie d'émission optique avec plasma à couplage inductif (ICP-OES) (Varian 720ES). Les expériences ont été réalisées avec un rapport massique FeO / eau de 1 / 200.

Les composants de la phase gazeuse (H₂, CO₂, N₂, O₂, CO, CH₄) ont été analysés avec un chromatographe en phase gazeuse de type Clarus 500 (Perkin Elmer^{®}) équipé d'une colonne polymérique (Restek ShinCarbon^{®}) et d'un détecteur à conductivité thermique (TCD). La température du détecteur, le système d'injection et du four était respectivement de 250, 100 et 80°C. L'argon était le gaz éluant. Chaque échantillon de gaz a été analysé au moins trois fois. En ce qui concerne les expériences 1 à 21 conduites dans les capsules, il a été considéré que la totalité du H₂ est dans la phase gazeuse obtenue après avoir percé la capsule. En ce qui concerne les expériences 20 à 22 conduites dans l'autoclave, la composition de H₂ dans les échantillons de gaz a été déterminée en tenant compte de la proportion de H₂ en phase gazeuse et dans le milieu liquide.

La proportion de fer dans la solution aqueuse a été déterminée juste après prélèvement de la solution aqueuse avec des échantillons de 2 mL par spectroscopie UV après complexation par l'orthophénantroline. Conservés au réfrigérateur, tous les échantillons ont été analysés à nouveau par ICP-OES.

**Tableau 1 : Conditions des expériences à partir de wüstite et proportion d'H₂ produit.**

| **Exp.** | **Acide** | **c° (mol/L)** | **T (°C)** | **P (bars)** | **Durée (h)** | **pH** | **g H₂ / kg FeO (g / kg)*** | **conversion** |
|---|---|---|---|---|---|---|---|---|
| **1** | MeCOOH | 0,05 | 150 | 300 | 240 | 3 | 2,62 | 28% |
| **2** | acide oxalique | 0,001 | 150 | 300 | 240 | 3 | 0,24 | 3% |
| **3** | HCI | 0,001 | 150 | 300 | 240 | 3 | 0,20 | 2% |
| **4** | MeCOOH | 0,005 | 150 | 300 | 72 | 3,5 | 0,074 | 1% |
| **5** | MeCOOH | 0,05 | 150 | 300 | 72 | 3 | 2,58 | 28% |
| **6** | MeCOOH | 0,5 | 150 | 300 | 72 | 2,5 | 1,91 | 21% |
| **7** | MeCOOH | 0,05 | 100 | 300 | 72 | 3 | 0,058 | <1% |
| **8** | MeCOOH | 0,05 | 200 | 300 | 72 | 3 | 5,34 | 58% |
| **9** | MeCOOH | 0,05 | 150 | 300 | 24 | 3 | 1,34 | 14% |
| **10** | MeCOOH | 0,05 | 150 | 300 | 3 | 3 | 0,068 | <1% |
| **11** | MeCOOH | 0,05 | 150 | 300 | 168 | 3 | 4,08 | 44% |
| **12** | MeCOOH | 0,05 | 150 | 300 | 72 | 3 | 2,46 | 27% |
| **13** | MeCOOH | 0,05 | 150 | 300 | 8 | 3 | 0,30 | 3% |
| **14** | MeCOOH | 0,05 | 100 | 300 | 172 | 3 | 0,23 | 2% |
| **15** | MeCOOH | 0,05 | 200 | 300 | 24 | 3 | 3,74 | 40% |
| **16** | MeCOOH | 0,05 | 200 | 300 | 3 | 3 | 2,86 | 31% |
| **17** | MeCOOH | 0,05 | 200 | 300 | 48 | 3 | 3,26 | 35% |
| **18** | HCI | 0,001 | 150 | 300 | 72 | 3 | 0,084 | <1% |
| **19** | HCI | 0,001 | 200 | 300 | 72 | 3 | 0,19 | 2% |
| **20** | MeCOOH | 0,05 | 150 | 160 | 48 | 3 | 8,06 | 87%*** |
| **21** | Eau | - | 150 | 150 | 64,5 | 6 | 0,26 | 3%*** |
| **22** | Eau | - | 300 | 180 | 144 | 6 | 2,18 | 23%*** |

| | | | | | | | | |
|---|---|---|---|---|---|---|---|---|
| *c*° = *concentration en acide, T* = *température, P* = *pression* ** masse de H₂ produit mesuré par chromatographie en phase gazeuse divisée par la masse initiale de matériau contenant de la wüstite* *** conversion calculées à partir de la masse de H₂ produit* **** Les différences de conversion observées dans les capsules (expériences 1 à 19) ou dans l'autoclave (expériences 20 à 22) pour des conditions de pression, température et nature de la solution aqueuse similaires pourraient s'expliquer par la grosse différence de ratio FeO*/*solution aqueuse (1*/*200 en autoclave et 1*/*1 dans les capsules) et*/*ou la quasi absence de phase gazeuse dans les expériences faites en capsules et*/*ou surtout en l'absence d'agitation du milieu réactionnel dans les capsules.* | | | | | | | | |

La conversion de la réaction de l'étape a) du procédé (dernière colonne du tableau 1) a été calculée en analysant les quantités d'hydrogène (avant dernière colonne du tableau 1), qui sont directement corrélées à celles de magnétite.

### • Influence de la nature de l'acide sur la conversion

La comparaison des résultats des expériences 1, 2 et 3 montre que, à 150°C et 300 bars, la proportion d'hydrogène est 10 fois supérieure lorsque de l'acide acétique a été utilisé à la place d'acide chlorhydrique ou oxalique.

### • Influence du pH et de la température sur la conversion

La comparaison des résultats des expériences 4, 5 et 6 montre que, à une température de 150°C et 300 bars et lorsque de l'acide acétique a été utilisé, la proportion d'hydrogène est bien supérieure à pH 2,5 ou 3 qu'à pH de 3,5. Les conditions optimales semblent être atteintes à ces températures et pression pour un pH de 3. En effet, la conversion en hydrogène est très différente à pH de 3,5 ou 3 (respectivement 1 ou 28%), mais est du même ordre de grandeur à pH 3 ou 2,5 (28 et 21%).

Les résultats des expériences 7 à 17, dans lesquelles une solution aqueuse d'acide acétique à pH 3 a été utilisée avec une pression de 300 bars, montrent que, pour une même durée de réaction, la conversion de la réaction augmente avec la température.

Cette observation est similaire en utilisant de l'eau comme solution aqueuse: la conversion en hydrogène est de 3% à 150 °C (expérience 21), et de 23% à 300°C (expérience 22), soit 9 fois plus.

Dans l'eau à pH 6 à deux températures de réaction (150 et 300°C), la production en hydrogène a été suivie au cours du temps (expériences 21 et 22).

A 150°C (expérience 21), du H₂ a été produit uniquement dans les 10 premières heures de la réaction dans une proportion correspondant à une conversion de 3%. De faibles quantités de magnétite ont été identifiées par XRPD au milieu de FeO résiduel. Entre 10h et 65h de durée de réaction, aucun H₂ n'a été produit.

A 300°C (expérience 22), dans les 10 premières heures de la réaction, les cinétiques de production d'hydrogène était quatre fois plus importantes qu'à 150°C. Contrairement à l'expérience à 150°C, du H₂ était toujours produit après 10h de réaction, à un taux de production qui diminuait progressivement avec le temps. Après 144 h, une conversion de 23% a été obtenue.

Il est donc possible de réaliser la réaction à pH 6, mais il convient d'utiliser des températures plus élevées que celles nécessaires à pH 3. La comparaison des résultats des expériences 20 et 21 montre que la conversion de la réaction est fortement influencée par la présence d'acide acétique. En effet, à 150°C, lorsque la solution aqueuse est de l'eau, FeO n'a pratiquement pas réagi (expérience 21), alors que lorsque la solution aqueuse est une solution aqueuse à 0,05 mol/L d'acide acétique pH de 3, la conversion était presque totale en 10 heures.

La comparaison des expériences 20 et 22 montre que pour augmenter la cinétique de la réaction, l'utilisation d'une solution aqueuse acide est bien plus avantageuse que d'augmenter la température.

Le solide obtenu à la fin des réactions a été lavé plusieurs fois à l'eau, broyé puis analysé par diffraction des rayons X sur poudre (XRPD). Les diffractogrammes ont été obtenus avec un diffractomètre D8 (Bruker, CuKα radiation) (balayage en 2θ à 0,026°, 8 s).

Une partie du solide a été conservé non broyé pour analyse par microscopie électronique, Microscopie électronique à balayage (MEB) à émission de champ (« Field Emission Scanning Electron Microscopy » (FE-SEM)) (appareil ZEISS Ultra 55 en utilisant à la fois une détection d'électrons secondaires et d'électrons de dispersion en retour) et microscopie électronique à transmission (MET) (« Transmission Electronic Microscopy » (TEM)) (appareil Jeol FEG 2100F utilisé à 200 kV). Les deux appareils étaient munis d'un détecteur par spectroscopie des rayons X en dispersion d'énergie (« Energy-Dispersive X-ray spectroscopy (EDS) ») pour analyse chimique. Pour les analyses par MEB à émission de champ, avant la métallisation Au-Pd, l'échantillon était soit monté sur un adhésif à base de carbone double face soit incorporé dans une résine époxy et poli. Pour les analyses par MET, une goutte de l'échantillon sous forme de poudre était dispersée dans l'éthanol et déposée sur une grille recouverte de carbone de type Lacey.

L'observation des solides obtenus par FE-SEM a permis de distinguer la wüstite et la magnétite. FeO, de nombre atomique moyen plus élevé, le flux d'électrons rétrodiffusés est supérieur à celui issu de la magnétite.

A l'échelle du micron, les figures FE-SEM du solide prélevé dans l'autoclave lors des expériences 21 et 22 montrent que l'oxydation du FeO en magnétite est principalement localisée dans des canaux distribués de façon homogène dans les grains. La magnétite semble nucléer au niveau de défauts structurels ou de craquelures. La magnétite pourrait se former par un procédé d'auto-oxydation du FeO. Quel que soit le procédé d'oxydation qui a lieu, la formation de la magnétite à l'intérieur des grains suggère que la cinétique de la réaction n'est pas directement corrélée à la surface spécifique du FeO utilisé comme produit de départ. Autrement dit, le broyage des grains de FeO pour diminuer leurs tailles ne devrait pas augmenter la cinétique de la réaction de façon significative.

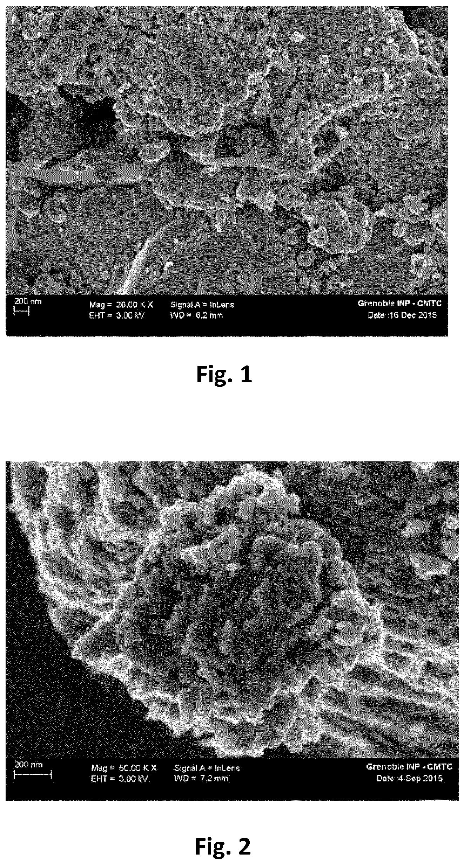

L'analyse combinée des images FE-SEM (figures 1, expérience n'° 20) et MET (figure 3, expérience n°20 ont permis une estimation des populations et répartitions des particules de magnétites produites. Le solide obtenu contient de la magnétite sous forme de particules avec trois populations de taille :
- de 10 à 20 nm,
- de 100 à 200 nm,
- de taille micrométrique.

Les techniques analytiques et appareil décrits dans l'exemple 1 ont été utilisés dans tous les exemples qui suivent.

### Exemple 2 : Préparation de magnétite à partir d'un mélange wüstite/CaO

Les expériences 23 et 24 ne sont pas couvertes par les revendications.

Afin de simuler le comportement de la wüstite dans un laitier d'aciérie, dont CaO est un composant majoritaire, des expériences ont été réalisées dans des capsules en or sur des mélanges wüstite/CaO.

**Tableau 2 : Conditions des expériences à partir d'un mélange wüstite/CaO et proportion d'hydrogène produit.**

| **Exp.** | **matériau** | **Acide** | **c° (mol/L)** | **pH** | **T (°C)** | **P (bars)** | **Durée (h)** | **g H₂ / kg FeO - (g / kg)** |
|---|---|---|---|---|---|---|---|---|
| **23** | FeO /, Ca(OH)₂, : 1/1* | MeCOOH | 0,05 | 9,1 | 150 | 300 | 72 | 0,00051 |
| **24** | FeO /, CaCO₃, : 1/1* | MeCOOH | 0,05 | 5,8 | 150 | 300 | 72 | 0,051 |
| **25** | FeO (témoin) | Eau | 0,05 | 3,0 | 150 | 300 | 72 | 2,47 |

| | | | | | | | | |
|---|---|---|---|---|---|---|---|---|
| *c°* = *concentration en acide, T* = *température, P* = *pression* * rapports massiques | | | | | | | | |

Les résultats du tableau 2 montrant que l'addition de CaO, qu'il soit sous forme de Ca(OH)₂ ou de CaCO₃, inhibe la réaction, ce qui s'expliquerait notamment par l'augmentation du pH induit par ces composés.

### Exemple 3 : Préparation de magnétite à partir de laitier d'aciérie

Les expériences 30-32 ne sont pas couvertes par les revendications.

Des expériences ont été réalisées sur du laitier d'aciérie de type LAC échantillonné sur le site de Fos sur Mer. Ce laitier a subi un vieillissement de deux semaines à l'air sur site.

**Tableau 3 : Conditions des expériences à partir de laitier d'aciérie.**

| **Exp.** | **matériau** | **Acide** | **c° (mol/L)** | **T (°C)** | **P (bars)** | **Durée (h)** |
|---|---|---|---|---|---|---|
| **26** | laitier | MeCOOH | 2 (pH = 2,2) | 150 | 300 | 72 |
| **27** | laitier | MeCOOH | 4 (pH = 2) | 150 | 300 | 72 |
| **28** | laitier | MeCOOH | 2 (pH = 2,2) | 300 | 300 | 72 |
| **29** | laitier | MeCOOH | 4 (pH = 2) | 300 | 300 | 72 |
| **30** | laitier | Eau | ----- (pH = 11-12) | 250 | 180 | 72 |
| **31** | laitier | Eau | ----- (pH = 11-12) | 300 | 180 | 72 |
| **32** | laitier | Eau | ----- (pH = 11-12) | 350 | 180 | 72 |

| | | | | | | |
|---|---|---|---|---|---|---|
| *c°* = *concentration en acide, T* = *température, P* = *pression* | | | | | | |

Les expériences 26, 27, 28 et 29 ont été réalisées en capsules dans une solution d'acide acétique. Du fait de la présence de CaO et Ca(OH)₂ dans le laitier d'aciérie, des concentrations élevées en acide acétique sont nécessaires pour atteindre la gamme de pH recherché.

Les solides obtenus dans les différentes expériences ont été analysés par XRPD. A 300°C, le FeO initial présent dans le laitier a été presque totalement consommé et une proportion très importante de magnétite a été observée. A 150°C, la conversion de FeO est très faible. L'augmentation de la concentration en acide acétique permet d'accélérer la formation de magnétite.

Les expériences 30, 31 et 32 ont été conduites en autoclave à prélèvements en présence d'eau dé-ionisée. Du fait de la présence de CaO et Ca(OH)₂ dans le laitier d'aciérie, la réaction a été conduite à un pH compris entre 11 et 12. Les taux de conversion calculés d'après la mesure en H₂ produit sont, pour les expériences 30, 31 et 32, respectivement de 9, 20 et 43% après 24 h de traitement. L'élévation de température permet une accélération cinétique significative.

Une séparation magnétique a été réalisée selon le protocole décrit précédemment. Une première séparation du solide en suspension dans l'eau a été effectuée à l'aide d'un aimant permanent à température ambiante et sous ultrasons. Une solution d'acide chlorhydrique à 1 mol / litre a alors été ajouté au solide séparé afin d'améliorer la dissolution des phases de Ca résiduel et, donc, la pureté du solide obtenu au final. Une deuxième étape de séparation a alors été effectuée au sein de cette suspension à température ambiante et sous ultrasons. Les solides des différentes étapes de séparation ont été analysés par XRPD afin de quantifier leurs proportions en magnétite et wüstite.

Ces analyses ont permis d'estimer que le solide obtenu après réaction à une température de 300°C, pression de 180 bars en présence d'eau et à la suite du traitement décrit ci-dessus contient environ 20% en poids de Wüstite et 80% en poids de magnétite (toutes populations de taille confondues).

L'analyse combinée des images FE-SEM (figure 2, expérience n°31) et MET (figure 4, expérience n°31) ont permis une estimation des populations et répartitions des nano-magnétites produites. Le solide obtenu contient de la magnétite sous forme de particules avec trois populations de taille :
- de 10 à 20 nm,
- de 100 à 200 nm,
- de taille micrométrique.

Afin d'estimer les proportions de chaque population, il est possible d'utiliser une méthode utilisant des gradients de champ intense grâce à des fibres métalliques plongées dans la solution qui s'écoule sous un champ magnétique fort (0,5 - 1,2 T).

### Exemple 4 : Préparation de magnétite à partir de laitier d'aciérie préalablement traité par l'acide acétique

Des expériences ont été réalisées à partir de laitier d'aciérie, à une température de 250°C et une pression de 150 bars sur des échantillons préalablement broyés et pour un ratio massique laitier / solution de 1/100.

Dans l'expérience 33, le laitier a été utilisé sans traitement préalable. La réaction a été mise en œuvre en présence d'eau et au pH naturel du laitier en suspension compris entre 11 et 12 pendant 72 heures.

Dans l'expérience 34, le laitier a subi un traitement préalable avec une solution aqueuse à 4 mol/L d'acide acétique à température ambiante (25°C). Ce traitement permet de décalcifier le laitier et de doubler la concentration en oxyde de fer. La réaction à haute température (250°C) a été mise en œuvre en présence d'une solution aqueuse d'acide acétique à 1 mol/L. La décalcification préalable du laitier permet de travailler à un pH compris dans la gamme de 2 à 4. Le pH au cours de la réaction à 250°C a été mesuré entre 3,5 et 4

La proportion en hydrogène produit a été suivie en suivant la méthode décrite pour l'exemple 1 et est fournie à la figure 5. Les résultats montrent que la conversion est nettement améliorée en utilisant un laitier préalablement décalcifié.

Les solides obtenus à la fin des réactions ont été traités comme décrit pour l'exemple 3. Les analyses par diffraction des rayons X sur poudres ont permis de quantifier les proportions en magnétite et en wüstite. La magnétite est majoritaire et représente une proportion supérieure à 70% de la masse totale du solide.

### REFERENCES

[1] Hironori et al. (2007) Synthesis of Fe3O4 nanoparticles with various sizes and magnetic properties by controlled hydrolysis Journal of Colloid and Interface Science 314 274-280
[2] Martinez-Mera et al. (2007) Synthesis of magnetite (Fe3O4) nanoparticles without surfactants at room temperature. Materials Letters 61, 4447-4451
[3] Malvoisin B., Brunet F., Carlut J., Montes-Hernandez G., Findling N., Lanson M., Vidal O., Bottero J. Y. and Goffé B. (2013) High-purity hydrogen gas from the reaction between BOF steel slag and water in the 473-673 K range. Int. J. Hydrogen Energ. 38(18), 7382-7393.
[4] Eloneva et al. (2008) Steel converter slag as a raw material for precipitation of pure calcium carbonate. Ind. Eng. Chem. Res., 47, 7104-7111.
[5] Kelland (1998) Magnetic séparation of nanoparticles. IEEE transactions on magnetics, 34, 2123-2125.

## Revendications

1. Procédé de préparation de magnétite comprenant les étapes de :
a) réaction à une température de 100 à 500°C d'un matériau contenant de la wüstite avec de l'eau, l'eau étant l'eau d'une solution aqueuse dont le pH est de 2 à 5 lorsque ladite solution aqueuse est à 25°C et à 1 bar, pour obtenir un solide comprenant de la magnétite, puis
b) récupération de la magnétite sous forme de particules dont plus de 25% en poids sont de taille nanométrique.

2. Procédé selon la revendication 1, dans lequel la température de la réaction de l'étape a) est de 150 à 350°C, de préférence de 150 à 250°C.

3. Procédé selon l'une quelconque des revendications 1 et 2, dans lequel le pH de la solution aqueuse est de 2 à 4.

4. Procédé selon la revendication 3, dans lequel le pH de la solution aqueuse est de 2,5 à 3.

5. Procédé selon l'une quelconque des revendications 1 à 4, dans lequel la solution aqueuse contient un acide organique comprenant un groupe susceptible de se complexer avec les ions fer, tel que le groupe -COOH, de préférence l'acide organique est l'acide acétique.

6. Procédé selon l'une quelconque des revendications précédentes, dans lequel la pression lors de la réaction de l'étape a) est de 5 à 700 bars, notamment de 10 à 400 bars, de préférence de 40 à 200 bars.

7. Procédé selon l'une quelconque des revendications précédentes, dans lequel le matériau contenant de la wüstite est un laitier d'aciérie, de préférence un laitier d'aciérie de conversion ou un laitier d'aciérie à four électrique.

8. Procédé selon la revendication 7, dans lequel le laitier d'aciérie est un laitier décalcifié.

9. Procédé selon la revendication 8, comprenant, avant l'étape a), une étape de mise en contact d'un laitier d'aciérie avec une solution aqueuse de décalcification de pH de 1 à 6 pour obtenir un laitier décalcifié.

10. Procédé selon la revendication 8 ou 9, dans lequel, lors de l'étape a), le pH de la solution aqueuse est de 3 à 4, la pression est de 100 à 200 bars et la température est de 200 à 350°C, notamment de 250 à 300°C.

11. Procédé selon l'une quelconque des revendications précédentes, dans lequel l'étape b) est effectuée par séparation magnétique.

12. Procédé la revendication 11, dans lequel l'étape b) comprend les sous-étapes de :
b1) éventuellement broyage du solide comprenant de la magnétite obtenu à l'étape a), puis
b2) ajout d'eau ou d'une solution acide au solide comprenant de la magnétite pour obtenir un mélange,
b3) séparation magnétique du mélange de l'étape b2) pour obtenir un solide,
b4) ajout d'eau ou d'une solution acide au solide obtenu à l'étape b3) pour obtenir un mélange,
b5) séparation magnétique du mélange de l'étape b4) pour obtenir la magnétite sous forme de particules dont plus de 25% en poids sont de taille nanométrique.

13. Procédé selon l'une quelconque des revendications précédentes, comprenant, après l'étape b), une étape c) de séparation des particules de taille nanométrique de la magnétite obtenue à l'étape b), par exemple par séparation magnétique à haut gradient.

14. Procédé selon l'une quelconque des revendications 1 à 6 et 11 à 13, dans lequel le matériau contenant de la wüstite est de la wüstite.

## Patentansprüche

1. Verfahren zur Herstellung von Magnetit, die folgenden Schritte umfassend:
a) Reaktion bei einer Temperatur von 100 bis 500°C eines Werkstoffs, welcher Wüstit enthält, mit Wasser, wobei das Wasser das Wasser aus einer wässrigen Lösung ist, deren pH-Wert von 2 bis 5 beträgt, wenn die wässrige Lösung auf 25°C und auf 1 bar ist, um einen Feststoff zu erhalten, der Magnetit umfasst, danach
b) Auffangen des Magnetits in Form von Teilchen, von denen mehr als 25 Gew.-% von nanometrischer Größe sind.

2. Verfahren nach Anspruch 1, wobei die Temperatur der Reaktion aus dem Schritt a) von 150 bis 350°C, vorzugsweise von 150 bis 250°C beträgt.

3. Verfahren nach einem der Ansprüche 1 und 2, wobei der pH-Wert der wässrigen Lösung von 2 bis 4 beträgt.

4. Verfahren nach Anspruch 3, wobei der pH-Wert der wässrigen Lösung von 2,5 bis 3 beträgt.

5. Verfahren nach einem der Ansprüche 1 bis 4, wobei die wässrige Lösung eine organische Säure enthält, die eine Gruppe umfasst, die sich mit den Eisen-Ionen, wie der-COOH-Gruppe komplexieren kann, wobei die organische Säure vorzugsweise Essigsäure ist.

6. Verfahren nach einem der vorstehenden Ansprüche, wobei der Druck bei der Reaktion aus dem Schritt a) von 5 bis 700 bar, insbesondere von 10 bis 400 bar, vorzugsweise von 40 bis 200 bar beträgt.

7. Verfahren nach einem der vorstehenden Ansprüche, wobei der Werkstoff, der Wüstit enthält, eine Stahlwerkschlacke, vorzugsweise eine Umwandlungsstahlwerkschlacke oder eine Elektroofen-Stahlwerkschlacke ist.

8. Verfahren nach Anspruch 7, wobei die Stahlwerkschlacke eine entkalkte Stahlwerkschlacke ist.

9. Verfahren nach Anspruch 8, vor dem Schritt a) einen Schritt des Kontaktierens einer Stahlwerkschlacke mit einer wässrigen Entkalkungslösung mit einem pH-Wert von 1 bis 6 umfasst, um eine entkalkte Stahlwerkschlacke zu erhalten.

10. Verfahren nach Anspruch 8 oder 9, wobei beim Schritt a) der pH-Wert der wässrigen Lösung von 3 bis 4 beträgt, der Druck von 100 bis 200 bar beträgt und die Temperatur von 200 bis 350°C, insbesondere von 250 bis 300°C beträgt.

11. Verfahren nach einem der vorstehenden Ansprüche, wobei der Schritt b) durch Magnetabscheidung durchgeführt wird.

12. Verfahren nach Anspruch 11, wobei der Schritt b) die folgenden Teilschritte umfasst:
b1) eventuell Zerkleinern des Magnetit umfassenden Feststoffes, der im Schritt a) erhalten wird, danach
b2) Hinzufügen von Wasser oder einer Säurelösung zum Magnetit umfassenden Feststoff, um ein Gemisch zu erhalten,
b3) Magnetabscheidung des Gemisches aus dem Schritt b2), um einen Feststoff zu erhalten,
b4) Hinzufügen von Wasser oder einer Säurelösung zu dem im Schritt b3) erhaltenen Feststoff, um ein Gemisch zu erhalten,
b5) Magnetabscheidung des Gemisches aus dem Schritt b4), um das Magnetit in Form von Teilchen zu erhalten, von denen mehr als 25 Gew.-% von nanometrischer Größe sind.

13. Verfahren nach einem der vorstehenden Ansprüche, welches nach dem Schritt b) einen Schritt c) des Abscheidens der Teilchen in nanometrischer Größe von dem im Schritt b) erhaltenen Magnetit, beispielsweise durch Magnetabscheidung mit einem hohen Gradienten umfasst.

14. Verfahren nach einem der Ansprüche 1 bis 6 und 11 bis 13, wobei der Wüstit enthaltende Werkstoff Wüstit ist.

## Claims

1. A method for preparing magnetite comprising the steps of:
a) reacting at a temperature of 100 to 500°C, a material containing wüstite with water, the water being the water of an aqueous solution whose pH is 2 to 5 when said aqueous solution is at 25°C and at 1 bar, to obtain a solid comprising the magnetite, then
b) recovering the magnetite in the form of particles of which more than 25% by weight are nanoscale.

2. The method according to claim 1, wherein the temperature of the reaction of step a) is 150 to 350°C, preferably 150 to 250°C.

3. The method according to any one of claims 1 and 2, wherein the pH of the aqueous solution is 2 to 4.

4. The method according to claim 3, wherein the pH of the aqueous solution is 2.5 to 3.

5. The method according to any one of claims 1 to 4, wherein the aqueous solution contains an organic acid comprising a group likely to be complexed with the iron ions, such as the -COOH group, preferably the organic acid is acetic acid.

6. The method according to any one of the preceding claims, wherein the pressure during the reaction of step a) is 5 to 700 bars, in particular 10 to 400 bars, preferably 40 to 200 bars.

7. The method according to any one of the preceding claims, wherein the material containing wüstite is a steelworks slag, preferably a conversion steelworks slag or an electric furnace steelworks slag.

8. The method according to claim 7, wherein the steelworks slag is a decalcified slag.

9. The method according to claim 8, comprising, before step a), a step of bringing a steelworks slag into contact with an aqueous solution for decalcifying the pH from 1 to 6 to obtain a decalcified slag.

10. The method according to claim 8 or 9, wherein, during step a), the pH of the aqueous solution is 3 to 4, the pressure is 100 to 200 bar and the temperature is 200 to 350°C, in particular 250 to 300°C.

11. The method according to any one of the preceding claims, wherein step b) is performed by magnetic separation.

12. The method of claim 11, wherein step b) comprises the sub-steps of:
b1) optionally grinding the solid comprising magnetite obtained in step a), then
b2) adding water or an acid solution to the solid comprising magnetite to obtain a mixture,
b3) magnetic separation of the mixture from step b2) to obtain a solid,
b4) adding water or an acid solution to the solid obtained in step b3) to obtain a mixture,
b5) magnetic separation of the mixture of step b4) to obtain the magnetite in the form of particles of which more than 25% by weight are nanoscale.

13. The method according to any one of the preceding claims, comprising, after step b), a step c) of separating nanoscale particles from the magnetite obtained in step b), for example by high gradient magnetic separation.

14. The method according to any one of claims 1 to 6 and 11 to 13, wherein the material containing wüstite is wüstite.
